Europäisches Patentamt

European Patent Office

Office européen des brevets

(11) Publication number: **0 354 614 B1**

## EUROPEAN PATENT SPECIFICATION

(45) Date of publication of patent specification: **24.11.93**  (51) Int. Cl.5: **C04B 28/18**, B28B 1/26

(21) Application number: **89202017.3**

(22) Date of filing: **01.08.89**

(54) **Method of fabricating porous moulds.**

(30) Priority: **04.08.88 NL 8801954**

(43) Date of publication of application:
**14.02.90 Bulletin 90/07**

(45) Publication of the grant of the patent:
**24.11.93 Bulletin 93/47**

(84) Designated Contracting States:
**AT BE CH DE ES FR GB GR IT LI LU NL SE**

(56) References cited:
**AU-B- 426 071**
**AU-B- 428 565**
**DE-A- 1 796 293**
**FR-A- 2 431 468**
**GB-A- 2 057 336**

(73) Proprietor: **Naamloze Vennootschap Konin-
klijke Sphinx**
**Boschstraat 24**
**NL-6211 AX Maastricht(NL)**

(72) Inventor: **Reijnen, Petrus Josephus Louisa**
**Loretaire 24620**
**Le Feyzie(FR)**

(74) Representative: **Kupecz, Arpad et al**
**Octrooibureau Los en Stigter B.V.**
**Postbox 20052**
**NL-1000 HB Amsterdam (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a method of fabricating porous moulds. Such moulds are suitable for casting ceramic slurry. Though the invention hereinafter is described by way of casting ceramic slurry it will be clear that the invention may also be used to a porous mould which is suitable for casting other materials as well as to related techniques. AU-B-426071 discloses a process for the manufacturing of calcium silicate products wherein among others hydraulic lime is used.

In casting ceramic slurry, i.e. a suspension of ceramic starting material the slurry is cast in a porous mould which mostly consists of gypsum or of a porous synthetic material, whereafter the medium in which the ceramic material is distributed, mostly water, is withdrawn from the pores by the mould as a consequence of the capillary action, whereby a semi-hard layer is formed which grows from the mould surface. When this layer has reached a sufficient thickness, the remainder of the slurry is allowed to flow out of the mould, whereafter the layer can be dried and demoulded. This process can be accelerated by pressurizing the slurry but ordinary gypsum moulds are usually too weak for this use.

Especially for pressure casting there are now proposed porous moulds of synthetic material which take away certain disadvantages of the gypsum moulds, expecially the weakness thereof, but these moulds of synthetic material are difficult to fabricate with uniform pores and furthermore are expensive. The disadvantages which are inherent to the use of gypsum moulds are: a limited life time because in use the gypsum is slowly dissolved in water, so that in the long run in casting details are lost and only a limited number of castings are possible; gypsum moulds should be slowly dried, since above 56°C the calcium sulfate dihydrate changes to calcium sulfate hemi-hydrate, whereby the strength of the gypsum is lost; the gypsum moulds in wet condition have a low strength; since the gypsum moulds have a low life time the mass production of ceramic products produces much gypsum waste causing additional costs.

However, according to the invention, new porous moulds have been developed, which in particular are suitable for casting with ceramic slurry, which retain the advantages of the conventional gypsum moulds but avoid the disadvantages thereof. For this purpose the present invention is characterized in that the mould substantially is a porous mass of alkaline earth metal silicate hydrate.

The moulds according to the present invention mainly consist of porous alkaline earth metal silicate hydrate. In case calcium is used as the alkaline earth metal then the lime silicate hydrate also often is indicated by the abbreviation CSH.

The porous form consisting of alkaline earth metal silicate hydrate is substantially insoluble in water so as to have a longer life time. Hereby few details of the moulding are lost and consequently large series of castings may be made. With the same porosity as the conventional gypsum moulds the present moulds have a higher strength, whereby furthermore the strength in wet condition is but little reduced, this in contrast to the strength of the porous gypsum moulds. The porous moulds according to the present invention consisting of alkaline earth metal silicate hydrate may be dried at temperatures above 100°C without decomposition taking place and without strength reduction. Thereby a quick reduction cycle is possible, i.e. the filling of the porous mould with ceramic slurry, for example, the growing of the layer, the removal of the ceramic slurry surplus, the drying of the layer, the demoulding and drying of the mould take a substantially shorter time than in the conventional production with porous gypsum moulds. Furthermore in the present moulds casting can be done at higher temperatures for example at 60 to 70°C, which is favourable since water at higher temperature has lower viscosity so that the water can be withdrawn more quickly from the ceramic slurry suspension and the total process is still quicker. Furthermore the present porous moulds may be fabricated relatively cheap. The present porous moulds are suitable for casting ceramic slurry with or without the use of pressure.

The formation of lime silicate hydrate or CSH-phases for several decades is known per se in the industry of sandlime brick- and gasious concrete. Thereby the reaction between lime hydrate ($Ca(OH)_2$) and a silicium dioxyde material is used to bind sand grains together to form cheap building products. This reaction is carried out in an autoclave at increased temperature and in saturated water vapour. For this purpose firstly rather coarse quartz sand is mixed with usually up to 10 per cent lime hydrate and water to a thick slurry which subsequently is pressed to the desired shape which thereafter is subjected to the autoclave treatment.

The porous moulds according to the present invention may be fabricated by mixing the starting materials, giving to this mixture a certain shape and bringing this shaped mixture in the autoclave for finally establishing the alkaline earth metal silicate hydrate composition. The mixture of starting materials for example can be treated in the autoclave when it is still present in a mould and to the mixture thickening agents or stabilising agents for example are added which guarantee the homogenous distribution of the particles in the water. For simple shapes with not too much details one may proceed in this manner.

According to another aspect of the present invention it has now been found that independently of the starting materials which have to yield the related alkaline earth metal silicate hydrate composition the present porous moulds can be fabricated in a particularly efficient and reproducable manner.

For this purpose the present invention relates to a method of fabricating porous moulds, as defined in claim 1.

This method is particular in that of the starting materials and eventually a hydraulic binder and water firstly by means of a binding process a green mould is made, which green mould subsequently as such is placed in the autoclave and therein is converted to the related alkaline earth metal silicate hydrate mass. In contrast to the industry of sand lime brick, wherein use is made of rather coarse sand grains so that relatively little lime hydrate is required and two phases are present as it were, namely a phase of intact sand grains which are bound together by a phase of lime silicate hydrate which are established by reaction of the lime hydrate with silicium dioxyde at the sand grain surface, a more homogenous microporous structure is obtained according to the present invention. The advantages of a mould with such a structure have already been described hereabove.

Under source of silicium dioxyde or silicium dioxyde material according to the invention is meant a material which mainly consists of silicium dioxyde whereby under silicium dioxyde is meant both $SiO_2$ - (anhydriet) as well as $SiO_2.xH_2O$ (wherein x may vary). The last mentioned formulas are bruto formulas mostly describing anorganic polymers which are known by various names like for example silicic acid, silicious earth, silicic acid anhydride. Such materials may be of natural origin as for example finely ground quartz sand or other finely ground minerals like opalite or may be released by industrial processes as main product or by-product.

As appears from the above the source of silicium dioxyde is not required to exclusively exist of silicium dioxyde but may contain contaminations.

Preferably the source of silicium dioxyde should be as pure as possible but econcomic considerations often may lead to a preference for a less pure source of silicium dioxyde. By way of some preliminary experiments it may be always determined if a certain source of silicium dioxyde is suitable according to the invention.

The reactivity of the source of silicium dioxyde is principally determined by the specific surface thereof, which specific surface in the ceramic industry mostly is expressed as BET-surface (P.H. Emmett "Measurement of surface area of finely divided or porous solids by low temperature adsorption isotherms", in Advances of Coloid Sciences, Vol. 1, 1942, page 1 and further). As this specific surface will be greater and therewith the particle size smaller and/or the porosity greater, the source of silicium dioxyde will more fully react to the related alkaline earth metal silicate hydrate structure.

In the method according to the invention it is preferred that as a source of silicium dioxyde a silicium dioxyde material is used whose averaged particle size is smaller than 10μm and in particular smaller than 1μm.

There may be used both cristaline sources of silicium dioxyde as for example quartz sand that is finely ground to a suitable particle size as well as amorphous sources like finely ground opalite. These sources which are mentioned as examples are what in the ceramic industry is expressed as moderately reactive silicic acids.

According to the method of the invention it is especially preferred that a monodisperse source of silicium dioxyde consisting of amorphous globules of silicium dioxyde with a particle size of about 0.01-0.5 μm are used. Such source of silicium dioxyde is very reactive and reacts about fully. Such materials may contain 95 to 98 % $SiO_2$. This starting material is brought on the market in various forms like under the name Microsilica® by the firm ELKEM of Norway (N 4620 Vagsbygd) and under the name RW-Füller® by the firm VAW in West Germany, under the name Aerosil® by the firm Degussa in West Germany, under the name HDK® (highly disperse silicic acid) by the firm Wacker in West Germany. From economic considerations Microsilica® and RW-Füller® however are preferred. Such materials in general yield the highest strength of the porous moulds.

With advantage the last mentioned source of silicium dioxyde is prefired in the air at about 600°C. By this pretreatment probably organic rests are burnt whereby the binding process is essentially improved.

It can be particularly favourable according to the invention, that the source of silicium dioxyde and in particular the above mentioned very reactive source of silicium dioxyde firstly is ground wet before the other components are added. By this wet grinding operation the particles of silicium dioxyde are well dispersed whereby the quantity of make up water is considerably reduced.

The other essential component in the method according to the invention is the tri-alkaline earth metal silicate. Examples of such materials are the tri-calcium, -barium and -strontium silicates. Because of their particularly favourable ratio between properties and price it is however preferred to use a tri-calcium silicate containing material. An example of a suitable tri-calcium silicate containing material which also contains a considerable quantity of other material is Portland cement.

In the method of the invention preferably use is made of a tri-calcium silicate that is prepared from lime hydrate and a reactive source of silicium dioxyde in a molar Ca : Si proportion of about 3 : 1.

Such tri-alkaline earth metal silicates usually have the advantage that they at the same time function as a hydraulic binder, i.e. that they mixed with water bind so as to yield a green mould of sufficient strength. During this binding process a gel-like alkaline earth metal silicate hydrate phase is produced and usually the related alkaline earth hydrate is released. The gel-like phase during the autoclave treatment assumes a cristaline shape while at the same time the released alkaline earth hydrate in the autoclave further reacts with the source of silicium dioxyde to the cristaline alkaline earth metal silicate hydrate phase. By this binding properties it usually is not necessary to add an additional hydraulic binder though this may be done with advantage if desired.

As hydraulic binders for example may be mentioned the alfa- and beta-calcium sulfate hemi-hydrate, Portland-cement, tri-calcium silicate, tri-barium silicate, tri-strontium silicate, $3CaO.P_2O_5$, $4CaO.Al_2O_3.Fe_2O_3$, $3 CaO.Al_2O_3$ and combinations thereof.

With advantage in the method of the present invention as a hydraulic binder calcium sulfate hemi-hydrate may be used. In this case by the binding process gypsum (calcium sulfate dihydrate) is formed which gives its initial strength to the green mould.

It is obvious that the proportion between the various starting materials will not be essential but in the present method it is preferred that the source of silicium dioxyde and the tri-alkaline earth metal silicate are used in such quantities that the molar proportion alkaline earth metal : Si (related to reactive $SiO_2$) is about 1 : 1. By so adjusting this proportion of the starting materials one obtains a reaction as complete as possible under formation of a very high strength. Hereby it is noted that in case of very reactive silicium dioxyde relatively more tri-alkaline earth metal silicate is added than in case of a moderately reactive source of silicic acid.

When in the method of the invention calcium sulfate hemi-hydrate is used as an hydraulic binder, then this is used preferably in a quantity related to the solid materials of at most 40% of weight. By using relatively more calcium sulfate hemi-hydrate a greater initial strength is obtained but at the same time the final strength of the porous mould decreases.

With advantage in the method according to the invention on one part of weight of total solid materials at most about 3 parts of weight of water is used and in particular 0.5-1.5 parts of weight of water. The quantity of water therein depends on the used starting materials, the desired final product and the shaping technique to be used and the optimal quantity be may simply determined by some preliminary experiments.

The quantity of water that can be used besides by the wet preliminary grinding of the source of silicium dioxyde, according to the method of the present invention also may be reduced by also using a flooding agent. Thereby it is possible to vary the quantity of make up water (i.e. to reduce), whereby the final porosity may be adjusted as desired. Since the alkaline earth metal silicate hydrate structure during the autoclave treatment settles out of the watery phase, for example in the form of needle cristals, which subsequently intermingle or felt to the desired porous mass, the quantity of make up water essentially influences the size of the pores in the final porous mould. By adding a flooding agent the end porosity can be adjusted.

There are numerous flooding agents which may be used in the present invention. As an example of flooding agents may be mentioned: Rheobuild 1000® by Masterbuilders, Belgium, brought onto the market, and Melment® of the firm Süddeutsche Kalkwerke (SKW) in West Germany.

With advantages, related to the total solid materials, at most about 4% of flooding agent is used. A too large quantity of flooding agent namely can give undesirable side-effects like slow binding and less final strength.

The method of the invention preferably is so carried out that the mixing of the solid starting materials with liquid, in particular water takes place in vacuum and/or that the mixture is de-aerated in vacuum. Thereby it is on the one hand avoided that air bubbles are enclosed in the final product, whereby the regular porosity and the quality of the surface of the mould are harmed and the precision of representation is deteriorated.

In particular it is preferred in the method of the invention that the solid materials are mixed with the liquid, in particular water to a thin suspension which subsequently may be cast to the desired mould. By using a thin suspension even complicated casting moulds with very many details may be fabricated, which is more difficult or even impossible with thick suspensions.

The binding process can be accelerated by a temperature increase. With advantage the binding process is carried out at a temperature of 40-50°C. Care should be taken that no essential quantity of

4

liquid, in particular water evaporates.

Though the liquid to which the solid materials are mixed usually is water, the invention is in no way limited thereto. By using organic liquids like ethanol, propanol, butanol etc. also satisfactory results may be obtained.

It will be clear, that the autoclave treatment is strongly dependent of the used starting materials and of the desired final product and that the autoclave conditions thus may vary within broad limits. In the method according to the invention the autoclave treatment with advantage is carried out at a temperature of 120-250°C under saturated liquid vapour pressure, during 2-100 hours, whereby it is particularly preferred that the autoclave treatment is carried out at 170-200°C during 5-50 hours. Though such ranges are preferred ranges it will be clear for an expert on the related fields that deviations may be made from these ranges both in upward as well as in downward direction dependent of the particular conditions.

If after demoulding the green mould this cannot immediately be subjected to the autoclave treatment but should be stored, there can be formation of cracks at the surface of such moulds by non-uniform shrinking over the entire thickness of mould during drying. The same can take place when a ready autoclaved mould is used in the production process whereby the mould after establishment of the ceramic layer should be dried for a next production cycle. Since the present porous moulds are stable up to far above 100°C it is possible to carry out forced-drying at such temperatures. Care should be taken that there is no formation of cracks by non-uniform shrinking. It is particularly preferred in the method of the invention that after demoulding of the green mould and/or after the autoclave treatment the mould is subjected to controlled drying by slowly heating the mould to a temperature above 100°C in a can which but for a small opening is closed, with eventually a layer of water therein. The (green) mould is transferred into a closed can with a small opening, which opening serves to prevent pressure from building up in the can, in which furthermore some water may be present. By slowly heating the can with the mould to a temperature which is somewhat above 100°C the mould is heated without loss of water. Only above 100°C the drying process begins. Since the viscosity of water at 100°C is so small that the evaporating water at the surface is sufficiently quickly supplied there is no gradient in the humidity of the mould and the material shrinks uniformly without the formation of cracks. By carefully operating a mould with a thickness of several centimeters can be well dried. Such method is especially useful when using Portland cement.

With advantage in the above mentioned method according to the invention the mould is dried at a temperature of 110-150°C for some hours. The gain of time which may be gained by such drying operation relative to the conventional drying is considerable and may even amount to one or more days. Furthermore this drying makes it possible that the green mould can be stored for a longer time without formation of cracks.

Further improvements of mechanical properties may be obtained by adding fibre materials. As examples of such fibre materials may be mentioned wollastonite fibres, aramide fibres and any glass fibres.

The invention will hereinafter be explained by way of some embodiments which are only given by way of example.

As starting materials the following are used:

Microsilica® with an average particle size of 0.15 μm of the firm ELKEM (Norway) which was prefired in the air at 600°C;

Fine quartz sand that by wet grinding in a ball mill during 48 hours was brought to a BET-surface of 3 m² per gram;

Opalite originating from Macedonia (Yugoslavia) which in a beating mill was preground and thereafter during 6 hours in a ball mill was wet ground;

Tri-calcium silicate which was prepared from Microsilica® and lime hydrate in a mol proportion of 3 to 1, by wet mixing of the powders and after drying heating to 1375°C during 6 hours, whereafter quick cooling was effected. The final product was tri-calcium silicate with a very small quantity of calcium oxyde. The so obtained tri-calcium silicate was wet ground with Microsilica in isopropyl alcohol such that the mol proportion CaO : SiO was adjusted to 1 : 1. The so obtained powder is indicated in the embodiment with the letter A;

Portland cement of the firm ENCI of Holland with a BET-surface of about 0.8 m²/g;

Flooding agent Rheobuild 1000 of the firm Masterbuilders of Belgium;

Alfa- and beta-calcium sulfate hemi-hydrate of the firm POLIET of France.

The powder-like starting materials were intensively mixed with water and eventually flooding agent to a thin flowable mass. This mass in vacuum was liberated from air bubbles and subsequently cast in moulds with a size of 12 x 2 x 2 cm as well as in cylindrical moulds with a diameter of 5 cm and a height of 5 cm. After the casting operation the casting was covered to prevent the water from evaporating. After a day, when the binding reaction has already far proceeded, again some water was poured on the free surfaces.

After three days the castings were taken out of the mould and in wet condition placed in the autoclave. It is noted that by allowing the binding to take place at higher temperature, for example 40 or 50°C, the castings may be demoulded earlier. The autoclave reaction was carried out during 8 hours at 190°C, whereby the total autoclave cycle lasted for 16 hours.

Of the so fabricated products the following properties were measured:

The percentage of open pores. This percentage is measured by submersion in water in vacuum and determination of the weight increase. The total volume of the castings was calculated from the geometric dimensions.

The Vickers hardness. This was determined both in dry as well as in wet condition.

The suction capacity Z. The value of the suction capacity Z in casting ceramic slurry is used as a characteristic value for a related casting mould. This value Z is a constant which represents the thickness L of the layer deposited on the surface of the porous mould as a function of the time according the relation $L^2 = Zt$. The value of Z depends of the chosen slurry, the temperature and the suction capacity of the mould. In the following examples always a sanitary casting slurry with a semi-porcelain composition was used, which was cast at room temperature.

The obtained results are included in the table A below.

The experiments show that the properties of the obtained formed products do not depend of the moulds in which they have been cast.

The experiments show that the present products are vary resistent against water, in that even after having lied in water for 24 hours still no surface detail of the product was lost, this in contrast to the product of the comparitive example X. Furthermore the examples show that the Vickers-hardness of the present products which contain little gypsum as an hydraulic binder (10%) is substantially independent of the fact whether the product is wet or dry. Furthermore with a given porosity the products of the invention have a considerably higher Vickers-hardness than corresponding gypsum products, while at the same time with gypsum products the Vickers-hardness in wet condition strongly decreases. The compression strength, breaking strength and the wear resistance of the products of the invention have not been separately examined but it may be assumed that the values of these properties also increase with increasing Vickers-hardness.

The suction capacity of the products of the invention for a given porosity is better than that of the corresponding gypsum products.

Furthermore an experiment was carried out to determine the influence on the slurry viscosity of the flooding agent and the wet grinding of the source of silicium dioxyde. The viscosity was measured of a slurry which contained 55% by weight of Microsilica® and this amounted to 520 mPas. With 1% of flooding agent the viscosity was decreased to 360 mPas. When, instead of 1% of flooding agent 2 hours of grinding operation took place in a ball mill (with balls of aluminium oxyde) then the viscosity was 170 mPas. After 2 hours of grinding in the presence of 1% of flooding agent a viscosity of 110 mPas was obtained.

By using one or both of these measures the quantity of make up water may be considerably reduced.

**TABLE  A**

| Composition | Open porosity (%) | $H_v$ (dry) ($kgf/mm^2$) | $H_v$ (wet) ($kgf/mm^2$) | suction-capacity Z ($mm^2$/min) |
|---|---|---|---|---|
| Example  I<br>500 g A<br>75 g wollastonite fibres<br>1000 g water<br>1 g flooding agent | 74 | 8,2 | 8,2 | 2,7 |
| Example  II<br>500 g A<br>1000 g water<br>1 g flooding agent | 74 | 8,0 | 8,0 | 2,7 |
| Example  III<br>500 g A<br>50 g β-calcium sulfate-hemi-hydrate<br>550 g water<br>20 g flooding agent | 68 | 11,2 | 11,0 | 2,0 |
| Example  IV<br>500 g A<br>100 g β – calcium sulfate-hemi-hydrate<br>400 g water<br>20 g flooding agent | 52 | 15,4 | 15,4 | 1,0 |
| Example  V<br>300 g A<br>300 g water<br>12 g flooding agent | 69 | 13,0 | 12,9 | 1.9 |
| Example  VI<br>262,5 g A<br>37,5 g α-calcium sulfate-hemi-hydrate<br>300  g water<br>9  g flooding agent | 70 | 12,5 | 12,6 | 1,9 |

A: $C_3S$ + Microsilica in a C:S ratio of 1:1

## Claims

1. Method of fabricating porous moulds, in particular suitable for casting ceramic slurry, characterized in that a source of fine particles of siliciumdioxyde having an average particle size smaller than 10 $\mu$m, a tri-alkaline earth metal silicate and, if desired, a hydraulic binder are mixed with liquid, in particular

7

water, this mixture is transferred to a moulding apparatus in which it is allowed to bind until it reaches a strength sufficient for demoulding whereafter the so obtained green mould is demoulded and subjected to an autoclave treatment under saturated liquid vapour pressure for obtaining a mould which substantially is a porous alkaline earth metal silicate hydrate mass.

2. Method of claim 1, characterized in that a silicium dioxyde material is used whose averaged particle size is smaller than $1\mu$m.

3. Method of claim 2, characterized in that a monodisperse source of silicium dioxyde is used consisting of amorphous silicium dioxyde globules with a particle size of about 0.01-0.5$\mu$m.

4. Method of claim 3, characterized in that the said source of silicium dioxyde is prefired in the air at about 600°C.

5. Method of claims 1-4, characterized in that the source of silicium dioxyde firstly is ground wet before the other components are added.

6. Method of claims 1-5, characterized in that portland cement is used.

7. Method of claims 1-6, characterized in that a tricalcium silicate is used that is prepared from lime hydrate and a reactive source of silicium dioxyde in a molar Ca : Si porportion of about 3 : 1.

8. Method of anyone of the claims 1-7, characterized in that fibre materials are added.

9. Method of anyone of the claims 1-8, characterized in that for 1 part by weight of total solid materials at most about 3 parts by weight of water is used.

10. Method of claim 9, characterized in that per part by weight of total solid materials 0.5 to 1.5 parts by weight of water are used.

11. Method of anyone of the claims 1-10, characterized in that also a flooding agent is used.

12. Method of claim 11, characterized in that, related to the total solid materials, at most about 4% of flooding agent is used.

13. Method of claims 1-12, characterized in that the binding process is carried out at a temperature of 40-50°C.

14. Method of claims 1-13, characterized in that after demoulding the green mould and/or after the autoclave treatment the mould is subjected to a controlled drying by slowly heating the mould to a temperature above 100°C in a can which is closed but for a small opening.

15. Method of claim 14, characterized in that the mould is dried at a temperature of 110-150°C for some hours.

**Patentansprüche**

1. Verfahren zum Herstellen poröser, insbesondere zum Gießen keramischer Schlämme geeigneter Formen, dadurch gekennzeichnet, daß eine Quelle feiner Siliciumdioxidteilchen mit einer Teilchengröße kleiner als 10 $\mu$m, ein Tri-Erdalkalimetallsilikat und, falls gewünscht, ein hydraulisches Bindemittel mit einer Flüssigkeit, insbesondere Wasser, gemischt werden und diese Mischung in eine Formapparatur überführt wird, indem man die Mischung abbinden läßt, bis sie eine zum Entformen ausreichende Festigkeit erreicht hat, worauf die so erhaltene grüne Form entformt und einer autoklaven Behandlung unter gesättigtem Flüssigkeitsdampfdruck unterworfen wird, um eine Form zu erhalten, die im wesentlichen eine poröse Erdalkalimetallsilikathydratmasse ist.

2. Verfahren nach Anspruch 1, dadurch gekennzeichnet, daß ein Siliciumdioxidmaterial eingesetzt wird, dessen durchschnittliche Teilchengröße kleiner als 1 $\mu$m ist.

3. Verfahren nach Anspruch 2, dadurch gekennzeichnet, daß eine monodisperse Siliciumdioxidquelle eingesetzt wird, die aus amorphen Siliciumdioxidkügelchen mit einer Teilchengröße von etwa 0,01 bis 0,5 μm besteht.

4. Verfahren nach Anspruch 3, dadurch gekennzeichnet, daß besagte Siliciumdioxidquelle in Luft bei etwa 600 °C vorerhitzt ist.

5. Verfahren nach den Ansprüchen 1 bis 4, dadurch gekennzeichnet, daß die Siliciumdioxidquelle naß gemahlen wird, bevor die anderen Komponenten beigegeben werden.

6. Verfahren nach den Ansprüchen 1 bis 5, dadurch gekennzeichnet, daß Portlandzement eingesetzt wird.

7. Verfahren nach den Ansprüchen 1 bis 6, dadurch gekennzeichnet, daß Tri-Calciumsilikat eingesetzt wird, das aus Kalkhydrat und einer reaktiven Siliciumdioxidquelle in einem molaren Ca : Si-Verhältnis von etwa 3 : 1 zubereitet ist.

8. Verfahren nach einem der Ansprüche 1 bis 7, dadurch gekennzeichnet, daß Fasermaterialien hinzugefügt werden.

9. Verfahren nach einem der Ansprüche 1 bis 8, dadurch gekennzeichnet, daß auf 1 Gewichtsteil aller Feststoffmaterialien höchstens etwa 3 Gewichtsteile Wasser eingesetzt werden.

10. Verfahren nach Anspruch 9, dadurch gekennzeichnet, daß pro Gewichtsteil aller Feststoffmaterialien 0,5 bis 1,5 Gewichtsteile Wasser eingesetzt werden.

11. Verfahren nach einem der Ansprüche 1 bis 10, dadurch gekennzeichnet, daß auch ein Verflüssigungsmittel eingesetzt wird.

12. Verfahren nach Anspruch 11, dadurch gekennzeichnet, daß bezogen auf alle Feststoffmaterialien höchstens 4 % Verflüssigungsmittel eingesetzt werden.

13. Verfahren nach den Ansprüchen 1 bis 12, dadurch gekennzeichnet, daß der Abbindeprozeß bei einer Temperatur von 40 bis 50 °C durchgeführt wird.

14. Verfahren nach den Ansprüchen 1 bis 13, dadurch gekennzeichnet, daß nach dem Entformen die grüne Form und/oder nach der autoklaven Behandlung die Form einem gesteuerten Trocknen durch langsames Erhitzen der Form auf eine Temperatur von 100 °C in einem bis auf eine kleine Öffnung geschlossenen Behälter unterworfen wird.

15. Verfahren nach Anspruch 14, dadurch gekennzeichnet, daß die Form bei einer Temperatur von 110 bis 150 °C für einige Stunden getrocknet wird.

**Revendications**

1. Procédé de fabrication de moules poreux, convenant en particulier au moulage de bouillie céramique, caractérisé en ce qu'une source de fines particules de dioxyde de silicium ayant une taille moyenne de particules inférieure à 10 micromètres, un silicate tri-métallique alcalino-terreux et, si on le désire, un liant hydraulique sont mélangés avec un liquide, en particulier de l'eau, ce mélange est transféré vers un appareil de moulage dans lequel on le laisse se lier jusqu'à ce qu'il ait atteint une résistance suffisante pour le démoulage, après quoi le moule vert ainsi obtenu est démoulé et soumis à un traitement à l'autoclave sous une pression de vapeur de liquide saturée pour obtenir un moule qui, en substance, est une masse poreuse de silicate de métal alcalino-terreux hydraté.

2. Procédé selon la revendication 1, caractérisé en ce que l'on utilise un matériau dioxyde de silicium dont la taille moyenne de particules est inférieure à 1 micromètre.

3. Procédé selon la revendication 2, caractérisé en ce que l'on utilise une source monodispersée de dioxyde de silicium formée de globules de dioxyde de silicium amorphe ayant une taille de particules d'environ 0,01 à 0,5 micromètre.

4. Procédé selon la revendication 3, caractérisé en ce que ladite source de dioxyde de silicium est précuite à l'air à environ 600°C.

5. Procédé selon les revendications 1 à 4, caractérisé en ce que ladite source de dioxyde de silicium est d'abord broyée à l'état humide avant l'adjonction des autres composants.

6. Procédé selon les revendications 1 à 5, caractérisé en ce qu'on utilise du ciment Portland.

7. Procédé selon les revendications 1 à 6, caractérisé en ce que l'on utilise un silicate tricalcique qui est préparé à partir de chaux hydratée et d'une source réactive de dioxyde de silicium dans une proportion molaire Ca:Si d'environ 3:1.

8. Procédé selon l'une quelconque des revendications 1 à 7, caractérisé en ce que l'on ajoute des matériaux en fibres.

9. Procédé selon l'une quelconque des revendications 1 à 8, caractérisé en ce que, pour 1 partie en poids de matériaux solides totaux, on utilise au plus environ 3 parties en poids d'eau.

10. Procédé selon la revendication 9, caractérisé en ce que, par partie en poids de matériaux solides totaux, on utilise de 0,5 à 1,5 parties en poids d'eau.

11. Procédé selon l'une quelconque des revendications 1 à 10, caractérisé en ce que l'on utilise aussi un agent d'irrigation.

12. Procédé selon la revendication 11, caractérisé en ce que, par rapport aux matériaux solides totaux, on utilise au plus environ 4 % d'agent d'irrigation.

13. Procédé selon l'une quelconque des revendications 1 à 12, caractérisé en ce que le procédé de liaison est mis en oeuvre à une température de 40-50 °C.

14. Procédé selon l'une quelconque des revendications 1 à 13, caractérisé en ce que, après démoulage du moule vert et/ou après le traitement à l'autoclave, le moule est soumis à un séchage maîtrisé par chauffage lent du moule à une température supérieure à 100°C dans un récipient qui est fermé à l'exception d'une petite ouverture.

15. Procédé selon la revendication 14, caractérisé en ce que le moule est séché à une température de 110-150°C pendant quelques heures.